# DEMANDE DE BREVET EUROPEEN

(11) **EP 1 764 902 A2**
(43) Date de publication de la demande: **21.03.2007**
(21) Numéro de dépôt: 06291409.8
(22) Date de dépôt: 07.09.2006
(51) Int. Cl.: H02M 7/00

(54) **Dispositif de régulation numérique d'un système électrique et système électrique comportant un tel dispositif**

(30) Priorité: 08.09.2005 FR 0509154
(71) Demandeur: Hazemeyer S.A., 02430 Gauchy (FR)
(72) Inventeur: Cocquereaumont, Sébastien, 02100 Saint Quentin (FR)
(74) Mandataire: Hauer, Bernard

(57) **Abrégé**

- Le dispositif (1) comporte une carte d'échantillonnage (3) qui est susceptible de recevoir des valeurs analogiques correspondant à des paramètres mesurés sur le système (2) et qui est formée de manière à convertir ces valeurs analogiques en valeurs numériques, à les filtrer, les mettre en forme, et les mémoriser, et une carte de régulation (4) qui est reliée à la carte d'échantillonnage (3), qui est susceptible de prendre connaissance des valeurs numériques mémorisées par la carte d'échantillonnage (3), qui est formée de manière à engendrer, à partir de ces valeurs numériques, un ordre de régulation permettant de stabiliser au moins un point de fonctionnement particulier du système (2), ainsi qu'à engendrer des informations de gestion du système (2), et qui comporte des moyens permettant de transmettre l'ordre de régulation et les informations de gestion.

## Description

La présente invention concerne un dispositif de régulation numérique d'un système électrique, ainsi qu'un système électrique comportant un tel dispositif de régulation.

Dans le cadre de la présente invention, on entend par système électrique tout système comprenant des branchements et des appareils électriques, qui est utilisé notamment dans le domaine industriel, et pour lequel au moins un point de fonctionnement particulier doit être stabilisé. En d'autres termes, le point de fonctionnement considéré qui est relatif à un paramètre particulier, tel qu'une demande de consigne en courant, en tension ou en puissance par exemple, doit être maintenu constamment dans un domaine de valeurs très étroit, et ceci quelles que soient les variations d'autres paramètres du système (température, variation réseau, perturbation électromagnétique, ...), qui pourraient influer sur ce paramètre particulier.

A titre d'illustration, un tel système électrique peut notamment correspondre à une alimentation à découpage de 500 kW, débitant, dans une inductance, un courant moyen de 510 A.

On connaît des cartes de régulation de type analogique, qui sont équipées de transistors et d'amplificateurs opérationnels. De telles cartes présentent toutefois de nombreux inconvénients, et-en particulier :
- une dérive en température ;
- aucune reproductibilité sur les valeurs de boucle du convertisseur ; et
- aucune précision sur le réglage du point de fonctionnement.

On connaît également des cartes de régulation de type numérique en versions 8 bits ou 14 bits maximum. Toutefois, ces cartes usuelles ne sont pas assez précises pour la plupart des systèmes électriques. Aussi, on les utilise le plus souvent pour réguler des systèmes à longue constante de temps, tels que des fours industriels par exemple.

En outre, aucune des cartes de régulation connues ne permet une gestion globale du système auquel elle est associée.

La présente invention a pour objet de remédier à ces inconvénients.

Elle concerne un dispositif de régulation numérique particulièrement précis et compact, permettant de stabiliser au moins un point de fonctionnement d'un système électrique.

A cet effet, ledit dispositif de régulation numérique comporte, selon l'invention :
- une carte d'échantillonnage :
   ■ qui est susceptible de recevoir des valeurs analogiques correspondant à des valeurs de paramètres mesurés sur ledit système ; et
   ■ qui est formée de manière à convertir lesdites valeurs analogiques en valeurs numériques, à filtrer et mettre en forme ces valeurs numériques, et à les mémoriser ; et
- une carte de régulation :
   ■ qui est reliée à ladite carte d'échantillonnage ;
   ■ qui est susceptible de prendre connaissance des valeurs numériques mémorisées par ladite carte d'échantillonnage ;
   ■ qui est formée de manière à engendrer, à partir d'au moins certaines desdites valeurs numériques, un ordre de régulation permettant de stabiliser au moins un point de fonctionnement particulier dudit système ;
   ■ qui est formée de manière à réaliser une gestion automate complète dudit système et à engendrer des informations de gestion correspondantes ; et
   ■ qui comporte des moyens de transmission permettant de transmettre ledit ordre de régulation et lesdites informations de gestion. Ces moyens de transmission sont intégrés dans un bus de terrain industriel normalisé.

Ainsi, grâce à l'invention, on obtient un dispositif de régulation n-umérique qui permet de stabiliser de façon particulièrement efficace un point de fonctionnement particulier d'un système électrique du type précité. De plus, ce dispositif de régulation qui comporte simplement deux cartes (d'échantillonnage et de régulation) est particulièrement compact, ce qui permet d'obtenir un gain de place important.

Par ailleurs, ledit dispositif de régulation est également en mesure d'engendrer des informations de gestion. De préférence, lesdites informations de gestion concernent au moins la gestion d'entrées/sorties du système, la gestion d'un mode local et la gestion d'un mode distant. Ainsi, le dispositif de régulation conforme à l'invention qui, en plus de permettre la stabilisation d'un point de fonctionnement du système, réalise également une gestion de nombreuses fonctions dudit système, est donc particulièrement complet.

Dans un mode de réalisation préféré, ladite carte d'échantillonnage et ladite carte de régulation sont isolées électriquement, ce qui permet de maintenir un bon fonctionnement dudit dispositif de régulation.

Avantageusement, lesdits moyens de transmission -comportent au moins une fibre optique pour transmettre au moins ledit ordre de régulation.

Ainsi, on obtient :
- une précision de la commande ; et
- une isolation électrique entre l'électronique faible courant et la puissance.

Dans un mode de réalisation particulier, ladite carte de régulation comporte deux unités de calcul à virgule flottante, destinées respectivement à corriger des variations en tension du système et à positionner une valeur en courant dudit système. Ces unités de calcul représentent le coeur du dispositif de régulation. Ils cadencent toute la chaîne de régulation.

En outre, de façon avantageuse, ladite carte de régulation comporte un microcontrôleur muni d'un moyen de retard réglable.

Par ailleurs, avantageusement, ladite carte d'échantillonnage et ladite carte de régulation sont munies chacune d'une mémoire de sauvegarde effaçable. Ainsi, la carte d'échantillonnage et la carte de régulation sont en mesure de garder tous les paramètres importants, en particulier en cas de coupure de l'alimentation électrique, ce qui permet d'obtenir un dispositif de régulation particulièrement robuste.

Dans un mode de réalisation particulier, ledit dispositif de régulation comporte, de plus, des indicateurs lumineux permettant d'informer un opérateur sur l'état d'une pluralité de fonctions de ladite carte d'échantillonnage et de ladite carte de régulation, telles que l'alimentation des cartes ou la communication entre les cartes par exemple.

La présente invention concerne également un système électrique, du type précité, pour lequel au moins un-point de fonctionnement particulier doit être stabilisé.

Selon l'invention, ledit système électrique est remarquable en ce qu'il comporte un dispositif de régulation du type précité, qui est destiné à stabiliser ledit point de fonctionnement.

Les figures du dessin annexé feront bien comprendre comment l'invention peut être réalisée. Sur ces figures, des références identiques désignent des éléments semblables.

La figure 1 est le schéma synoptique d'un dispositif de régulation numérique conforme à l'invention, qui est associé à un système électrique, sur lequel il doit notamment stabiliser au moins un point de fonctionnement particulier.

La figure 2 est le schéma synoptique d'une carte d'échantillonnage d'un dispositif de régulation numérique conforme à l'invention.

La figure 3 est le schéma synoptique d'une carte de régulation d'un dispositif de régulation numérique conforme à l'invention.

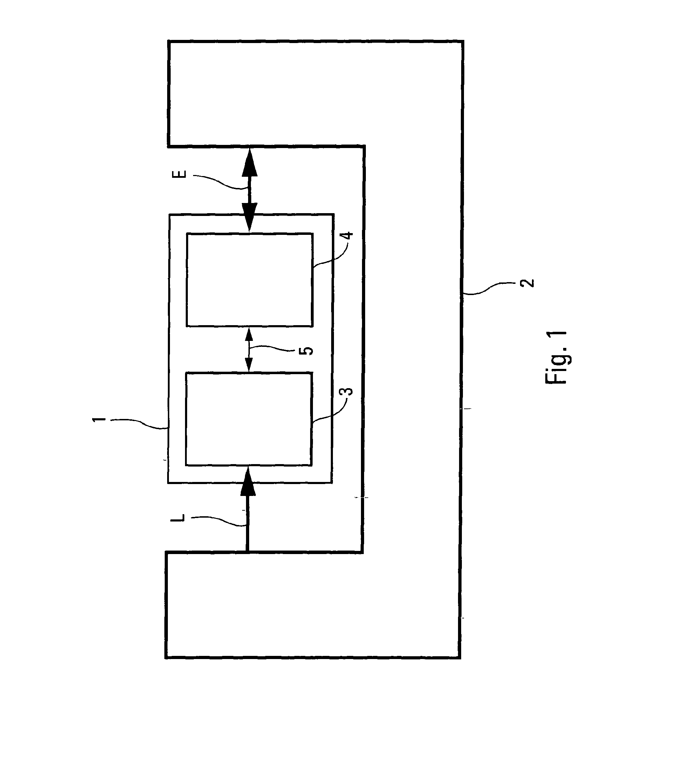

Le dispositif de régulation numérique 1 conforme à l'invention est destiné au moins à stabiliser un point de fonctionnement particulier d'un système électrique 2, auquel il est relié par des ensembles L et E de liaisons, comme représenté sur la figure 1. Ledit système électrique 2 peut en particulier correspondre à tout type de convertisseur statique utilisé dans la transformation d'énergie en courant et/ou tension continu. Ce système électrique 2 peut, par exemple, entrer dans la classe des alimentations à découpage à thyristor, IGBT, MOSFET, ou simplement pour les ballasts à transistors. A titre d'illustration, il peut s'agir d'une alimentation à découpage de 500 kW, débitant, dans une inductance, un courant moyen de 510 A. Cette dernière pourra être stabilisée, par la présente invention, autour d'une plage de valeur ne dépassant pas 5,8 mA.

Selon l'invention, ledit dispositif de régulation 1 comporte une carte d'échantillonnage 3 de type numérique, qui est reliée audit système 2 par ledit ensemble L de liaisons, et une carte de régulation 4 également de type numérique, qui est reliée audit système 2 par ledit ensemble E de liaisons. Lesdites cartes 3 et 4 sont, de plus, reliées ensemble par une liaison 5.

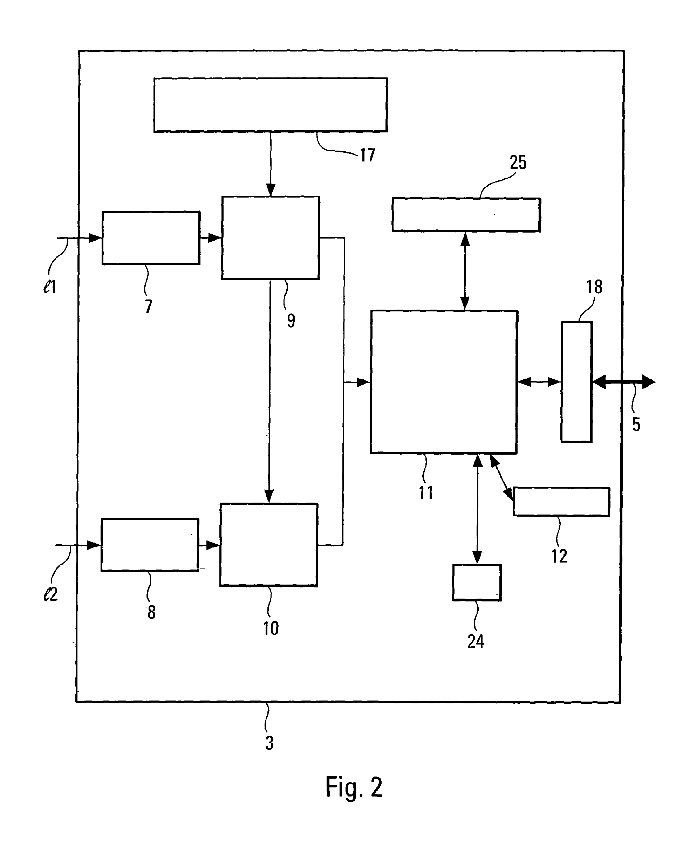

En outre, selon l'invention, ladite carte d'échantillonnage 3 qui est représentée schématiquement sur la figure 2, comporte :
- des moyens d'acquisition 7 et 8 qui sont reliés par des liaisons ℓ1 et ℓ2 (faisant partie dudit ensemble L de liaisons) audit système 2 et qui sont susceptibles de recevoir des valeurs analogiques qui correspondent à des valeurs de paramètres qui ont été mesurés sur ledit système 2. Il peut s'agir notamment de valeurs de température, de pression, de tension, de courant, ... ; et
- des moyens 9, 10, 11 et 12 précisés ci-dessous pour convertir lesdites valeurs analogiques en valeurs numériques, les filtrer, les mettre en forme et les mémoriser. Le traitement de mise en forme consiste essentiellement à rendre ces valeurs exploitables par la carte de régulation 4.

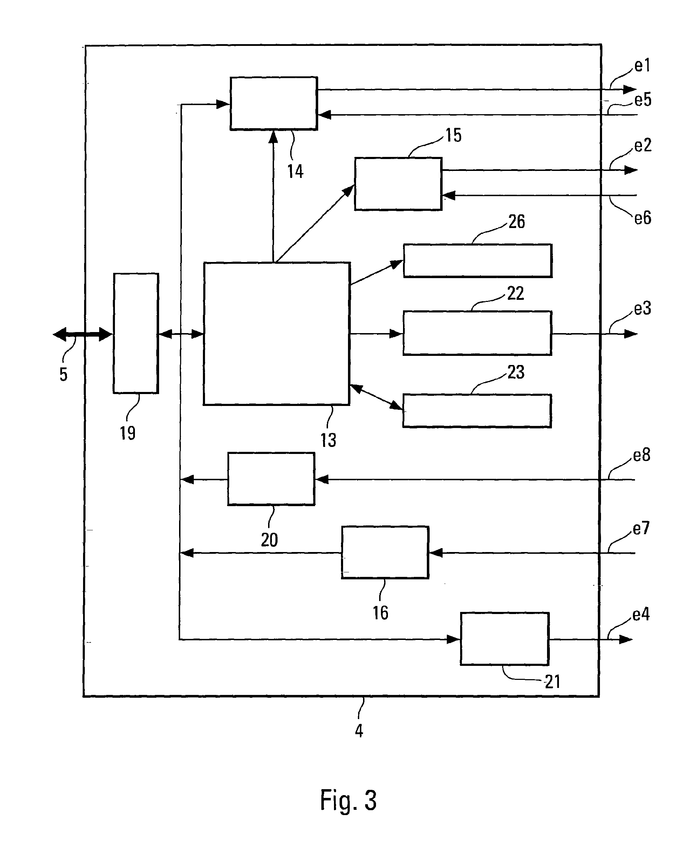

En outre, selon l'invention, ladite carte de régulation 4 qui est représentée schématiquement sur la figure 3 :
- est reliée par ladite liaison 5 à ladite carte d'échantillonnage 3 et est susceptible de prendre connaissance des valeurs numériques mémorisées par cette carte d'échantillonnage 3 ;
- comporte des moyens 13 permettant d'engendrer, à partir d'au moins certaines desdites valeurs numériques reçues de ladite carte d'échantillonnage 3, un ordre de régulation permettant de stabiliser au moins un point de fonctionnement particulier dudit système 2 ;
- comporte des moyens 14, 15 et 16 permettant d'engendrer des informations de gestion précisées ci-dessous, relatives audit système 2 ; et
- comporte des moyens de transmission permettant de transmettre ledit ordre de régulation et lesdites informations de gestion, par l'intermédiaire de liaisons e1, e2, e3 et e4 (faisant partie dudit ensemble E de liaisons) audit système 2.

Ainsi, le dispositif de régulation 1 conforme à l'invention est très complet, procure un gain de place, et permet une bonne intégration des différents éléments d'une chaîne de régulation. Il permet également d'interagir directement avec un standard de supervision. En outre, il fournit des résultats précis vis-à-vis de consignes demandées, et les paramètres se recopient entre cartes pour le même convertisseur.

Comme précisé ci-dessous, la précision du dispositif de régulation 1 provient principalement de la résolution de convertisseurs analogiques/numériques utilisés. Le dispositif de régulation 1 conforme à l'invention fonctionne sous 18 bits, ce qui signifie 232 144 pas de mesure différents. De plus, les informations de régulation relatives audit système électrique 2 présentent une résolution de plus de 260 000 pas de commande différents.

Conformément à un mode de réalisation préféré, le coeur même du traitement repose sur l'une des dernières générations de microcontrôleur "Infineon" (marque déposée) de type FLASH-C166V2 sur une combinaison des architectures RISC, CISC et DSP. Ce composant présente la particularité de garder un traitement de calcul important, tout en restant optimal pour le reste des tâches à réaliser. Il présente notamment les caractéristiques suivantes :
- fréquence de travail : 36 864 MHz ;
- deux sorties PWM par fibre optique indépendante ;
- temps de calcul : 5,4 µs ;
- fréquence d'échantillonnage : 500 ksps ;
- temps-d'acquisition : 1,8 µs ;
- temps de transfert de données : 100 ns ;
- THD : -91 dB ;
- SNR : 87 dB ;
- résolution : 4,2 ppm ;
- non-linéarité : +/- 10 ppm ;
- RS232 mode Hyper terminal ou accès par programme sécurisé ;
- alimentation unique et régulation en tension intégrée ; et
- connexion informatique par SuB-D9.

Le coeur du microcontrôleur possède la plupart des périphériques exploités. Sa structure basée sur une succession de registres de 16 bits, regroupe :
- un code instruction exécutable à 25 ns ;
- une multiplication (16x16) à 25 ns ; et
- 52 interruptions regroupées sur seize niveaux de priorité.

Par ailleurs, comme représenté sur la figure 2, chacun des moyens d'acquisition de données analogiques 7 et 8 de la carte d'échantillonnage 3 est relié à un convertisseur analogique/numérique 9 et 10 et met en oeuvre un filtrage analogique de type usuel. Ces convertisseurs 9 et 10 sont des convertisseurs numériques 18 bits rapides. Chacun desdits convertisseurs 9 et 10 est piloté par une unité 17 comportant deux sources de tension très précises. Une première source fournit une tension de sortie de 2,048 V +/- 25 µV. La seconde source fournit une tension de sortie de 4,096 V +/- 30 µV. Ces deux sources de tension sont essentielles à la bonne stabilité du correcteur.

En outre, ledit moyen 1-1 réalise un traitement numérique, un filtrage et une mise en forme du signal reçu. Ce premier traitement numérique permet d'augmenter la précision des mesures. Ainsi, chaque point de mesure est analysé, puis filtré par des méthodes de filtrage usuelles. Le travail du microcontrôleur consiste à traiter un maximum de points en temps-réel.

Les valeurs numériques obtenues ainsi sont-enregistrées dans une mémoire 12, d'où elles sont accessibles pour la carte de régulation 4.

Le transfert de données de la carte d'échantillonnage 3 vers la carte de régulation 4 est réalisé par l'intermédiaire de moyens de sortie usuels 18. Pour perdre le minimum de temps, la carte d'échantillonnage 3 est questionnée tous les 150 µs et il lui faut 120 ns pour répondre.

Par ailleurs, la carte de régulation 4 qui est représentée sur la figure 3 a donc notamment pour but de stabiliser un point de fonctionnement particulier du système 2. A cet effet, elle récupère les valeurs numériques traitées et mémorisées par la carte d'échantillonnage 3, les analyse et-les interprète en commandes d'ouvertures de MOS ou IGBT (c'est-à-dire en commandes à destination de convertisseurs à commutation MOS ou IGBT)

Pour ce faire, ledit moyen 13 de la carte de régulation 4 comporte deux unités de calcul à virgule flottante, destinées respectivement à corriger des variations en tension du système 2 et à positionner une valeur en courant dudit système 2. Par virgule flottante, on entend une méthode usuelle de calcul numérique permettant de garder un maximum de chiffres après la virgule. Ces unités de calcul représentent le coeur du dispositif 1 et elles ont pour objet de cadencer toute la chaîne de régulation. Un utilisateur ne valide que la consigne en courant du système 2, le reste de la chaîne étant autopositionné par ce correcteur numérique.

Par ailleurs, ledit moyen 13 est muni d'un moyen de retard réglable. Ce moyen de retard est obtenu par un unique composant intégrant une pluralité de portes logiques en cascade. Chaque porte logique est activée par un mot binaire de 8 bits. Cette caractéristique a pour conséquence de multiplier par cent la résolution d'une commande 22 précisée ci-dessous. L'ensemble appelé "ligne de retard" est rafraîchi pour chaque nouvelle commande provenant du moyen 13.

En outre, le moyen 14 de la carte de régulation 4 représente un gestionnaire qui est intégré au fonctionnement de régulation. Ce gestionnaire, qui est relié par des liaisons e1 et e5 audit système 2, est multiplexé au reste des fonctions. Il permet un contrôle distant, sans aucune carte supplémentaire. Les signaux de tension appropriés sont directement mis en forme.

En outre, le moyen 15 de la carte de régulation 4 est un moyen de gestion de mode local et le moyen 16 un moyen de gestion des états. Lesdits moyens 15 et 1 6 reçoivent des informations dudit système 2 par l'intermédiaire de liaisons e6 et e7.

Ainsi, le dispositif de régulation 1 conforme à l'invention est en mesure, en plus de stabiliser au moins un point de fonctionnement du système 2, de gérer la plupart des fonctions (ordres de marche, d'arrêt, de gestion des défauts de gestion à distance, ...) du convertisseur statique, ce qui permet d'obtenir un dispositif particulièrement complet.

La carte de régulation 4 comporte, de plus, un moyen 1 9 du même type que le moyen 18, pour permettre la transmission de données entre les deux cartes 3 et 4, ainsi qu'un moyen 20 de lecture de défauts qui est relié par une liaison e8 audit système 2. De plus, des ordres de commande peuvent être transmis par l'intermédiaire d'un moyen 21 relié à la liaison e4.

Dans un mode de réalisation préféré, la transmission des ordres de régulation est réalisée par une commande 22 par fibres optiques. Ainsi, on obtient :
- une précision de la commande ; et
- une isolation électrique entre l'électronique faible courant et la puissance. On évite ainsi tout problème de contact électrique et de boucle électromagnétique.

La carte de régulation 4 comporte également une mémoire de sauvegarde 23-Grâce auxdites mémoires 12 et 23 qui sont de préférence des mémoires de sauvegarde effaçables, la carte d'échantillonnage 3 et la carte de régulation 4 sont en mesure de garder tous les paramètres importants, en particulier en cas de coupure de l'alimentation électrique, ce qui permet d'obtenir un dispositif de régulation 1 particulièrement robuste. Les mémoires 12 et 23 sont rechargées au démarrage suivant.

La carte d'échantillonnage 3 comporte également une sonde de température 24 permettant de donner un aperçu sur une éventuelle dérive thermique.

Par ailleurs, ladite carte d'échantillonnage 3 comporte un ensemble 25 d'indicateurs lumineux et ladite carte de régulation 4 un ensemble 26 d'-indicateurs lumineux. Ces différents indicateurs lumineux permettent d'informer un opérateur sur l'état d'une pluralité de fonctions desdites cartes 3 et 4. A titre d'illustration, l'ensemble 25 d'indicateurs lumineux peut indiquer par exemple :
- l'état de l'alimentation de la carte d'échantillonnage 3 ;
- l'état de la communication entre les cartes 3 et 4 ;
- un éventuel défaut de communication ;
- un éventuel défaut de tension ;
- un éventuel défaut de courant ; et
- l'état de disponibilité de la carte d'échantillonnage 3.

En outre, à titre d'illustration, ledit ensemble 26 d'indicateurs lumineux peut indiquer :
- si un convertisseur est en régulation ;
- si un convertisseur est prêt ; et
- si un défaut a été détecté.

En plus-desdits ensembles 25 et 26 d'indicateurs lumineux, un utilisateur peut être informé de l'état du dispositif de régulation 1, par exemple :
- par une connexion (non représentée) en mode terminal ; et/ou
- par un logiciel de contrôle local, également non représenté.

## Revendications

1. Dispositif de régulation numérique d'un système électrique,
**caractérisé en ce qu'**il comporte :
- une carte d'échantillonnage (3) :
■ qui est susceptible de recevoir des valeurs analogiques correspondant à des valeurs de paramètres mesurés sur ledit système (2) ; et
■ qui est formée de manière à convertir lesdites valeurs analogiques en valeurs numériques, à filtrer et mettre en forme ces valeurs numériques, et à les mémoriser ; et
- une carte de régulation (4) :
■ qui est reliée à ladite carte d'échantillonnage (3) ;
■ qui est susceptible de prendre connaissance des valeurs numériques mémorisées par ladite carte d'échantillonnage (3) ;
■ qui est formée de manière à engendrer, à partir d'au moins certaines desdites valeurs numériques, un ordre de régulation permettant de stabiliser au moins un point de fonctionnement particulier dudit système (2) ;
■ qui est formée de manière à réaliser une gestion automate complète dudit système (2) et à engendrer des informations de gestion correspondantes ; et
■ qui comporte des moyens de transmission (e1 à e4) permettant de transmettre ledit ordre de régulation et-lesdites informations de gestion.

2. Dispositif selon la revendication 1,
**caractérisé en ce que** ladite carte d'échantillonnage (3) et ladite carte de régulation (4) sont isolées électriquement.

3. Dispositif selon l'une des revendications 1 et 2,
**caractérisé en ce que** lesdits moyens de transmission comportent au moins une fibre optique (e3) pour transmettre au moins ledit ordre de régulation.

4. Dispositif selon l'une quelconque des revendications précédentes,
**caractérisé en ce que** ladite carte de régulation (4) comporte deux unités de calcul à virgule flottante, destinées respectivement à corriger des variations en tension du système (2) et à positionner une valeur en courant dudit système (2).

5. Dispositif selon l'une quelconque des revendications précédentes,
**caractérisé en ce que** ladite carte de régulation (4) comporte un microcontrôleur muni d'un moyen de retard réglable.

6. Dispositif selon l'une quelconque des revendications précédentes,
**caractérisé en ce que** ladite carte d'échantillonnage (3) et ladite carte de régulation (4) sont munies chacune d'une mémoire de sauvegarde effaçable (12, 23).

7. Dispositif selon l'une quelconque des revendications précédentes,
**caractérisé en ce que** lesdites informations de gestion engendrées par ladite carte de régulation (4) concernent au moins la gestion d'entrées/sorties du système (2), la gestion d'un mode local et la gestion d'un mode distant.

8. Dispositif selon l'une quelconque des revendications précédentes,
**caractérisé en ce qu'**il comporte, de plus, des indicateurs lumineux (25, 26) permettant d'informer un opérateur sur l'état d'une pluralité de fonctions de ladite carte d'échantillonnage (3) et de ladite carte de régulation (4).

9. Système électrique, pour lequel au moins un point de fonctionnement particulier doit être stabilisé,
**caractérisé en ce qu'**il comporte un dispositif de régulation (1) du type de celui spécifié sous l'une quelconque des revendications 1 à 8, pour stabiliser ledit point de fonctionnement.
